Europäisches Patentamt

European Patent Office

Office européen des brevets

(19)

(11) Numéro de publication: **0 032 953**
**B1**

(12) **FASCICULE DE BREVET EUROPEEN**

(45) Date de publication du fascicule du brevet: **31.08.83**

(51) Int. Cl.³: **B 65 D 23/08**

(21) Numéro de dépôt: **79900921.2**

(22) Date de dépôt: **03.08.79**

(86) Numéro de dépôt international:
**PCT/JP79/00206**

(87) Numéro de publication internationale:
**WO 81/00391 19.02.81 Gazette 81/5**

(54) **BOUTEILLE REVETUE FABRIQUEE AVEC DE LA RESINE DE POLYESTER SATURE.**

(43) Date de publication de la demande:
**05.08.81 Bulletin 81/31**

(45) Mention de la délivrance du brevet:
**31.08.83 Bulletin 83/35**

(84) Etats contractants désignés:
**FR**

(56) Documents cités:
**JP - A - 48 068 384
JP - A - 48 073 291
JP - A - 48 073 292
JP - B - 33 000 490
JP - B - 33 002 141
JP - B - 49 003 073
JP - Y - 36 023 865
JP - Y - 47 030 887
US - A - 2 985 542**

(73) Titulaire: **Yoshino Kogyosho CO., LTD.
No. 2-6, Ojima 3-chome, Koto-ku
Tokyo 136 (JP)**

(72) Inventeur: **OTA, Akiho Yoshino Kogyosho Co., Ltd.
3-2-6, Ojima
Koto-ku Tokyo 136 (JP)**
Inventeur: **NEGISHI, Fumio Yoshino Kogyosho Co.,
Ltd.
3-2-6, Ojima
Koto-ku Tokyo 136 (JP)**

(74) Mandataire: **Mongrédien, André et al,
c/o BREVATOME 25, rue de Ponthieu
F-75008 Paris (FR)**

Courier Press, Leamington Spa, England.

EP 0 032 953 B1

## Bouteille revêtue fabriquée avec de la résine de polyester saturé

La présente invention se rapporte à une bouteille en résine polyester saturée, comportant sur sa surface une couche décorative et elle vise plus spécialement une bouteille en résine polyester saturée recouverte d'une couche de peinture, bouteille sur laquelle on a au préalable appliqué une couche d'apprêt destinée à empêcher la couche de peinture servant de décoration de s'écailler et que l'on recouvre ensuite d'une couche de finition.

Depuis un certain temps, les bouteilles en résine polyester saturée ont attiré l'attention des spécialistes, étant donné qu'elles ne donnent pas lieu à des fuites de solvant même sous l'attaque d'un liquide contenu dans ce solvant et qu'elles ne risquent pas de dégager des gaz délétères lorsqu'on les brûle.

Mais, lorsqu'il s'agit de recouvrir de peinture des bouteilles en résine polyester saturée en vue de les embellir, il se présente l'inconvénient que la peinture adhère mal à la surface des bouteilles et risque de s'écailler.

La présente invention qui vise à remédier à un tel inconvénient, a pour objet une bouteille en résine polyester saturée comportant sur sa surface extérieure une couche décorative, caractérisée par le fait que la surface extérieure de la bouteille est munie d'une couche d'apprêt (7) consistant en un solvant de polypropylène chloruré, laquelle couche d'apprêt est revêtue successivement avec une sous-couche (8) d'un produit acrylique que l'on laisse évaporer, une couche de peinture (9) comprenant un pigment ajouté à du nitrure de titane et une couche de finition (10) en résine uréthane constituant la couche la plus extérieure.

D'autres caractéristiques et avantages de l'invention ressortiront de la description qui va suivre, faite en regard des dessins annexés et donnant, à titre explicatif mais nullement limitatif, une forme de réalisation.

Sur ces dessins,

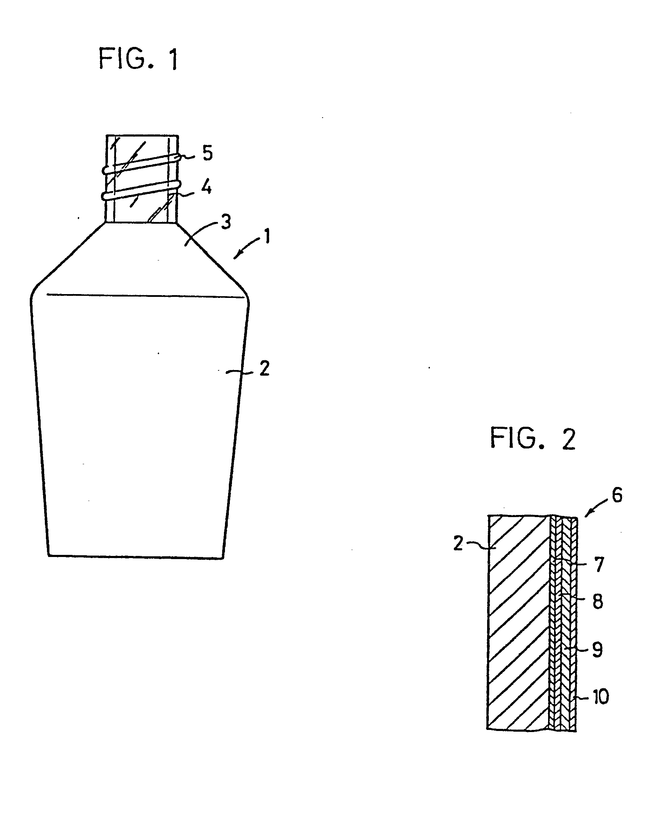

— la figure 1 est une vue avant en élévation, d'une bouteille en résine polyester saturée conforme à l'invention; et

— la figure 2 est une vue en coupe représentant une partie de la paroi latérale de cette bouteille.

La bouteille en résine polyester saturé, telle que représentée et désignée dans son ensemble par la référence 1, se compose d'un corps 2 muni d'un fond, d'un col 3 situé au-dessus de ce corps et d'un goulot 4 situé au-dessus de ce col. Ce goulot 4 comporte, sur son pourtour, des filets 5 sur lesquels on peut visser un bouchon. On décore la bouteille ainsi constituée en munissant sa surface, à l'exception du goulot, d'un revêtement 6 de peinture.

Ce revêtement nécessite les opérations suivantes: avant d'appliquer quoi que ce soit sur la bouteille, on la rince entièrement. On effectue cette opération de rinçage en plongeant la bouteille 1 dans un solvant fluoré puis en la soumettant à un traitement aux ultrasons pendant environ 5 minutes.

Le stade suivant consiste à appliquer une couche 7 faite d'un apprêt consistant en un solvant de polypropylène chloruré sur la surface de la bouteille 1, puis à laisser durcir cette couche pendant deux ou trois minutes. A la suite de ce durcissement, la bouteille qui, sans cela, risquerait de présenter une surface rugueuse, est au contraire bien lisse. On recouvre cette couche d'apprêt ainsi préparé d'une sous-couche 8. Cette dernière est obtenue par évaporation d'un produit acrylique et on la laisse sécher pendant une durée de deux à trois heures, à la température d'environ 55°C. Cette sous-couche 8 ainsi préparée joue le rôle d'un produit de surfaçage destiné à donner une bonne adhérence à la couche de peinture que l'on applique au stade suivant, ce qui est d'un grand intérêt compte tenu du fait qu'une couche de peinture servant de décoration adhère difficilement à la couche d'apprêt 7 si on l'applique directement sur cette dernière.

On recouvre cette sous-couche 8 d'une couche 9 de peinture nacrée, préparée en ajoutant un pigment bleu ou transparent à du nitrure de titane. Cette couche de peinture 9 adhère si fortement à la couche d'apprêt 7, par l'intermédiaier de la sous-couche 8, qu'elle ne risque pas de s'écailler tout en formant un motif décoratif. On applique sur cette couche 9 de peinture nacrée une couche de finition 10 composée de deux uréthanes à l'état liquide, qu'on laisse sécher à une température d'environ 55°C pendant environ 12 heures. La couche de finition 10 ainsi préparée qui recouvre la couche de peinture 9 a pour rôle à la fois d'empêcher cette dernière de s'écailler et de donner un plus bel aspect aux motifs ou aux lettres peints sur la bouteille.

Dans le cas où l'on désire imprimer sur le corps de la bouteille des lettres ou des éléments analogues, on commence par appliquer sur ce corps un pochoir que l'on écaille ensuite de manière à laisser sur le corps de la bouteille une partie exempte de peinture et transparente. Dans le cas de la forme de réalisation que l'on vient de décrire, on utilise pour la couche 9 une peinture nacrée, mais bien entendu l'invention ne se limite pas à un tel emploi et l'on peut utiliser une peinture d'un autre type.

Comme on vient de le voir, l'invention a pour objet une bouteille en résine polyester saturée obtenue en appliquant successivement sur sa surface extérieure une couche d'apprêt puis une sous-couche et ensuite une couche de peinture. De la sorte, même si la bouteille est en résine polyester, cette couche de peinture adhère fermement et l'on peut l'empêcher de s'écailler. En outre, étant donné que cette couche de peinture est ensuite recouverte d'une couche de finition qui constitue la surface la plus extérieure de la bouteille, la couche de peinture se trouve encore mieux protégée contre l'écaillage et les motifs qu'elle forme peuvent avoir un plus bel aspect.

Enfin, la bouteille se trouve avantageusement renforcée, étant donné qu'elle est protégée par ces quatre couches.

En outre, du fait que la bouteille est en résine polyester, elle est essentiellement exempte de toutes fuites de solvant même sous l'effet de l'attaque d'un liquide contenu dans ce solvant et elle ne risque pas de dégager des gaz délétères lorsqu'on la brûle.

## Revendications

1. Bouteille en résine polyester saturée comportant sur sa surface extérieure une couche décorative, caractérisée par le fait que la surface extérieure de la bouteille est munie d'une couche d'apprêt (7) consistant en un solvant de polypropylène chloruré laquelle, couche d'apprêt est revêtue successivement avec une sous-couche (8) d'un produit acrylique que l'on laisse évaporer, une couche de peinture (9) comprenent un pigment ajouté à du nitrure de titane et une couche de finition (10) en résine uréthane constituant la couche la plus extérieure.

2. Bouteille selon la revendication 1, caractérisée par le fait que la peinture de ladite couche est une peinture nacrée comprenant un pigment transparent ou un pigment bleu ajouté du nitrure de titane.

## Claims

1. Saturated polyester resin bottle having on its outer surface a decorative layer, characterized in that the outer surface of the bottle is provided with a priming coat (7) consisting of a chlorinated polypropylene solvent, said priming coat being successively covered with an undercoat (8) of an acrylic product which is allowed to evaporate, a paint coat (9) consisting of a pigment added to titanium nitride and a finishing coat (10) of urethane resin constituting the outermost coat.

2. Bottle according to claim 1, characterized in that the coating is painted with a nacreous paint, consisting of a transparent pigment or a blue pigment added to titanium nitride.

## Patentansprüche

1. Flasche aus gesättigtem Polyester, die auf ihrer äußeren Oberfläche eine dekorative Schicht enthält, dadurch gekennzeichnet, daß die äußere Oberfläche der Fasche mit einer Grundierungsschicht (7) aus einem Lösungsmittel für Polypropylenchlorid, versehen ist, wobei die Grundierungsschicht aufeinanderfolgend mit einer Unterschicht (8) eines acrylischen Produktes, das man eindicken läßt, einer Farbschicht (9) welche ein dem Titannitrid zugesetztes Pigment enthält, une einen Endanstrich Urethanharz, der die äußerste Schicht darstellt, überzogen ist.

2. Flasche nach Anspruch 1, dadurch gekennzeichnet, daß die Farbe der Schicht eine perlmuttartige Farbe ist, die ein transparentes Pigment oder ein blaues Pigment enthält, das dem Titannitrid zugefügt ist.

FIG. 1

FIG. 2